# EUROPEAN PATENT APPLICATION

(11) **EP 2 672 381 A1**
(43) Date of publication of application: **11.12.2013**
(21) Application number: 11858581.9
(22) Date of filing: 01.08.2011
(51) Int. Cl.: G06F 9/46

(54) **VIRTUAL RESOURCE MANAGEMENT METHOD, SYSTEM AND DEVICE**

(71) Applicant: Huawei Technologies Co., Ltd., Shenzhen, Guangdong 518129 (CN)
(72) Inventor: CHEN, Ben, Shenzhen, Guangdong 518129 (CN); YU, Baifeng, Shenzhen, Guangdong 518129 (CN)
(74) Representative: Haley, Stephen
(86) International application number: PCT/CN2011/077877
(87) International publication number: WO 2012/109870

(57) **Abstract**

A virtual resource management method, system, and apparatus are applied in the field of communications technologies. The virtual resource management method includes: running an input/output I/O domain on a remote node, if the remote node needs to enter a sleep state, obtaining information of a processor core occupied by running the input/output I/O domain on the remote node; stopping running the I/O domain if the remote node is in the sleep state; and sorting, according to the obtained information of the processor core, a resource of a corresponding processor core to a virtual resource pool, so that the processor core can be used to perform service processing, thereby implementing virtual resource management.

## Description

### FIELD OF THE INVENTION

The present invention relates to the field of information technologies, and in particular, to a virtual resource management method, system, and apparatus.

### BACKGROUND OF THE INVENTION

With the in-depth development of the informatization process, the number of physical servers required for operation and maintenance of an information technology (Information Technology, IT) continuously increases, and a separate physical server is deployed for each service application. However, resources of most physical servers are not fully used, while resource requirements of some physical servers are not satisfied. At present, in a distributed virtual technology, a resource is reallocated mainly through virtualization of a physical resource, so that a resource used by an upper application is not limited by a single physical server, thereby improving an overall utilization rate of resources, which is beneficial to configuration optimization.

In a distributed virtual machine monitor (Distributed Virtual Machine Monitor, DVMM) system to which the distributed virtual technology is appied, multiple servers are connected, through a switched fabric communications link used in high-performance computing (A switched fabric communications link used in high-performance computing, InfiniBand), to an InfiniBand switch, so that each server can access a resource of another server through an InfiniBand network.

A virtual machine (Virtual Machine, VM) is created by using a resource in a virtual resource pool on each server in the DVMM system, where a virtualized physical resource (for example, a memory, a central processing unit, and so on) of a server is stored in the virtual resource pool. In addition, a control domain (Control Domain) or an input/output domain (I/O Domain) may be run in the created virtual machine. The Control Domain is run on a boot strap node (Boot Strap Node, BSN), that is, a master node, where the master node can manage the resource in the virtual resource pool and can access a resource of a non-boot strap node (Non-BSN), that is, a slave node, or a remote node; and the I/O Domain may be run on the remote node. If a virtual machine of localized input/output I/O (Localized I/O, LIO) is created on the master node, the I/O Domain does not need to be run on the remote node; and if a virtual machine of distributed I/O (Distributed I/O, DIO) is created on the master node, the I/O Domain needs to be run on the remote node.

In the prior art, which domain to be run is determined in a process of creating a virtual machine, and whether the I/O Domain or the Control Domain is run, one core (core) of a processor needs to be occupied, where the processor core does not process another service process except for running the I/O Domain or running the Control Domain, which resultes in a waste of resources. For example, when a virtual machine of DIO is created on a master node, the I/O domain needs to be run on the remote node, and even if no master node accesses a resource of the remote node, the remote node uses the processor core to run the I/O domain without processing another service process, thereby resulting in a waste of resources.

### SUMMARY OF THE INVENTION

Embodiments of the present invention provide a virtual resource management method, system, and apparatus, so that a utilization rate of a processor core is improved and a waste of resources is reduced.

An embodiment of the present invention provides a virtual resource management method. The method includes: running an input/output I/O domain on a remote node, judging whether the remote node needs to enter a sleep state, and if the remote node needs to enter the sleep state, obtaining information of a processor core occupied by running the input/output I/O domain on the remote node, and stopping running the input/output I/O domain when the remote node is in the sleep state; and sorting, according to the obtained information of the processor core, a resource of the processor core that is corresponding to the information to a virtual resource pool, so that the processor core is applicable to service processing.

An embodiment of the present invention provides a virtual resource management method. The method includes: running, by a remote node, an input/output I/O domain, and judging whether the remote node needs to enter a sleep state, and if the remote node needs to enter a sleep state, sending a sleep request to a master node, so that the master node sorts, according to information of a processor core occupied by running the input/output I/O domain on the remote node, a resource of the processor core that is corresponding to the information to a virtual resource pool, so as to use the processor core to perform service processing; and stopping using the processor core to run the input/output I/O domain.

An embodiment of the present invention provides a node device. The node device includes: an information obtaining unit, configured to judge whether a remote node needs to enter a sleep state, and if the remote node needs to enter the sleep state, obtain information of a processor core occupied by running an input/output I/O domain on the remote node; and stop running the input/output I/O domain when the remote node is in the sleep state; a resource adding unit, configured to sort, according to the obtained information of the processor core, a resource of the processor core that is corresponding to the information to a virtual resource pool; and a service processing unit, configured to use the processor core to perform service processing, where the processor core is sorted to the virtual resource pool by the resource adding unit.

An embodiment of the present invention further provides a node device. The node device includes: a sleep judging unit, configured to run an input/output I/O domain on a remote node, and judge whether the remote node needs to enter a sleep state; a sleep request sending unit, configured to send a sleep request to a master node when the sleep judging unit judges that the remote node needs to enter the sleep state, so that the master node sorts, according to information of a processor core occupied by running the input/output I/O domain on the remote node, a resource of the processor core that is corresponding to the information to a virtual resource pool, so as to use the processor core to perofrm service processing; and a running stopping unit, configured to stop using the processor core to run the input/output I/O domain.

An embodiment of the present invention further provides a virtual resource management system, includeing a master node and at least one remote node.

The master node is configured to judge whether the remote node needs to enter a sleep state, and if the remote node needs to enter the sleep state, obtian information of a processor core occupied by running an input/output I/O domain on the remote node; stop running the input/output I/O domain when the remote node is in the sleep state; and sort, according to the obtianed information of the processor core, a resource of the processor core that is corresponding to the information to a virtual resource pool, so that the processor core can be used to perform service processing.

The remote node is configured to stop using the processor core to run the input/output I/O domain.

In the embodiments of the present invention, if a certain remote node needs to enter a sleep state, a master node obtains information of a processor core occupied by running an I/O domain on the remote node, and sorts, according to the obtained information of the processor core, a resource of the processor core that is corresponding to the information to a virtual resource pool, so that the processor core is applicable to service processing. Since the I/O domain is stopped running when the remote node is in the sleep state, the master node adds the processor core that runs the I/O domain to the virtual resource pool, so that the master node can use the resource of the processor core to perform service processing, thereby improving a utilization rate of the resource of the processor core and reducing a waste of resources.

### BRIEF DESCRIPTION OF THE DRAWINGS

To describe the technical solutions in the embodiments of the present invention or in the prior art more clearly, the accompanying drawings required for describing the embodiments or the prior art are introduced briefly in the following. Apparently, the accompanying drawings in the following description are only some embodiments of the present invention, and persons of ordinary skill in the art may still derive other drawings from these accompanying drawings without creative efforts.

FIG. 1 is a schematic structural diagram of a DVMM system according to an embodiment of the present invention;

FIG. 2 is a flow chart of a virtual resource management method according to an embodiment of the present invention;

FIG. 3 is a flow chart of a method for waking up a remote node according to an embodiment of the present invention;

FIG. 4 is a flow chart of another virtual resource management method according to an embodiment of the present invention;

FIG. 5 is a flow chart of a virtual resource management method according to a specific application embodiment of the present invention;

FIG. 6 is a flow chart of a virtual resource management method according to another specific application embodiment of the present invention;

FIG. 7 is a flow chart of a virtual resource management method according to another specific application embodiment of the present invention;

FIG. 8 is a schematic structural diagram of a node device according to an embodiment of the present invention;

FIG. 9 is a schematic structural diagram of another node device according to an embodiment of the present invention;

FIG. 10 is a schematic structural diagram of another node device according to an embodiment of the present invention;

FIG. 11 is a schematic structural diagram of another node device according to an embodiment of the present invention; and

FIG. 12 is a schematic structural diagram of another node device according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative efforts shall fall within the protection scope of the present invention.

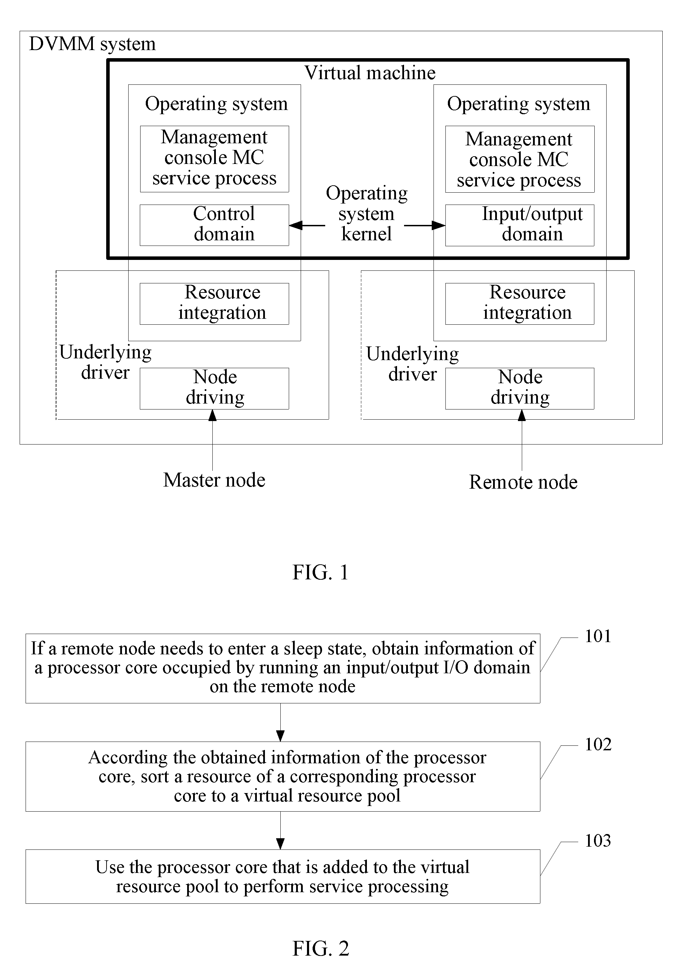

An embodiment of the present invention provides a virtual resource management method, which is applicable to a DVMM system shown in FIG. 1. Each node in the system includes an underlying driver, an operating system kernel (Linux Kernel), and a management console (Management Console, MC), where the underlying driver is configured to drive a node, and integrate and virtualize a physical resource of the node; the Linux Kernel is a core program of an operating system; and the MC is configured to manage the running of the Linux Kernel. The operating system (Operating System, OS) may be an implementation vehicle for the MC, the Linux Kernel, and resource integration.

In addition, the system further includes a virtual resource pool, where the virtual resource pool is a collection of physical resource access capabilities of nodes, and stores virtualized physical resources of the nodes, where the phsical recourses include a memory, a processor, an I/O resource, and so on.

In the DVMM system, each node may create a VM by using a resource in the virtual resource pool, where the virtual resource pool stores a virtualized physical resource of the node, and the created VM may include an MC and a Linux Kernel. A Linux Kernel in a virtual machine created on a master node runs a control domain, so as to implement configuration and access management of the virtual resource in the virtual resource pool; and a Linux Kernel included in a virtual machine created on a remote node runs an I/O domain, and may provide an I/O resource to the master node.

It should be noted that, one node in the DVMM system is one physical server.

In the DVMM system, the master node may implement virtual resource management by executing the following method. FIG. 2 is a flow chart of the method, and the method includes:

Step 101: Run an I/O domain on a remote node, and judge whether the remote node needs to enter a sleep state, and if the remote node needs to enter the sleep state, obtain information of a processor core occupied by running the input/output I/O domain on the remote node; and stop running the I/O domain when the remote node is in the sleep state.

It may be understood that, when a master node runs a control domain or a remote node runs an I/O domain, one core (core) of a processor needs to be occupied, for example, a Linux Kernel. When a certain remote node stops running an I/O domain, in order to use a resource of a processor core to process another service and save a resource, where the processor core is occupied by running the I/O domain, the master node may first obtain information of the processor core, where the information includes identifier information of the processor core, resource information of the processor core, information of a corresponding relationship between the processor core and the remote node, and so on.

In addition, whether the remote node enters the sleep state may be determined by the remote node itself. Specifically, if the remote node finds that no master node accesses an I/O resource on the remote node in a period of time, the remote node determines to enter the sleep state. At this time, the remote node sends a sleep request to the master node, and the remote node may also send information of a processor core that stops running an I/O domain to the master node at the same time. The accessing the I/O resource may specifically be operations such as use of a network card and a hard disk of the remote node.

Whether the remote node enters the sleep state may also be determined by the master node. Specifically, the master node may detect whether the remote node is in an idle state of I/O resource access, and if the remote node is in an idle state of I/O resource access, that is, no node accesses an I/O resource of the remote node, it is determined that the remote node needs to enter the sleep state. In this case, the master node further needs to send a sleep instruction to the remote node, so that the remote node stops running the I/O domain. When the remote node is in the idle state of I/O resource access, although the I/O resource of the remote node is not accessed in a period of time, the remote node still runs the I/O domain.

When the master node performs the obtaining in step 101, the master node may read information of a processor core that runs an I/O domain on the remote node, where the information is stored on the master node, and may also receive information of a processor core that runs an I/O domain, where the information is sent by the remote node.

It should be noted that, the I/O domain refers to a function of the remote node, that is, the remote node can run the I/O domain; and the I/O resource refers to a physical resource, and the master node and the remote node both have an I/O resource.

Step 102: According the obtained information of the processor core, sort a resource of the processor core that is corresponding to the information to a virtual resource pool, so that the processor core is applicable to service processing.

It may be understood that, sorting a resource of a corresponding processor core to a virtual resource pool is a process of adding the processor core to the virtual resource pool. Specifically, the master node may modify a resource information status of the processor core to an unoccupied status, and modify a sort attribute of resource information of the processor core to the virtual resource pool. In this way, resources in the virtual resource pool are all unoccupied resources, and all nodes can use the resources in the virtual resource pool to create a virtual machine, so as to perform service processing.

Step 103: Use the processor core that is added to the virtual resource pool in step 102 to perform service processing.

It can be seen that, in this embodiment of the present invention, if a certain remote node needs to enter a sleep state, a master node obtains information of a processor core occupied by running an I/O domain on the remote node, and sorts, according to the obtained information of the processor core, a resource of a corresponding processor core to a virtual resource pool, so that the processor core can be used to perform service processing. Since the I/O domain is stopped running when the remote node is in the sleep state, the master node adds the processor core that runs the I/O domain to the virtual resource pool, so that the master node can use the resource of the processor core to perform service processing, thereby improving a utilization rate of the resource of the processor core and reducing a waste of resources.

In a specific embodiment, a remote node may be in a sleep state, and may also be in a wake (Wake) state, and each of remote nodes is switched independently between a sleep state and a wake state without affecting each other. When a remote node is in a wake state, the remote node uses one processor core to run an I/O domain. Specifically, when a master node wakes up a remote node, the following cases may exist.

(1) Judge whether an I/O resource access request exists on the master node, if an I/O resource access request exists on the master node, and an address of the I/O resource access request belongs to a resource of any remote node that is in a sleep state, then:
A1: the master node migrates a resource of one processor core on a remote node that is in a sleep state out of a virtual resource pool; and
B1: the master node sends a wakeup request to the remote node that is in the sleep state.

It can be understood that, resource information of each remote node is stored on the master node, and includes information of a processor core and memory information. When an I/O resource access request for a certain remote node exists on the master node, if an address of the I/O resource access request belongs to any remote node that is in a sleep state, the master node needs to wake up the remote node. Specifically, the master node may migrate a resource of a certain processor core on the remote node out of the virtual resource pool, that is, modify a resource information status of a first processor core in the virtual resource pool to an occupied status, and modify a sort attribute of resource information of the first processor core; and then the master node sends a wakeup request to the remote node that is in the sleep state.

The wakeup request may include information of the processor core that is migrated out of the virtual resource pool by the master node, so that after receiving the wakeup request, the remote node uses the processor core migrated out of the virtual resource pool to run the I/O domain.

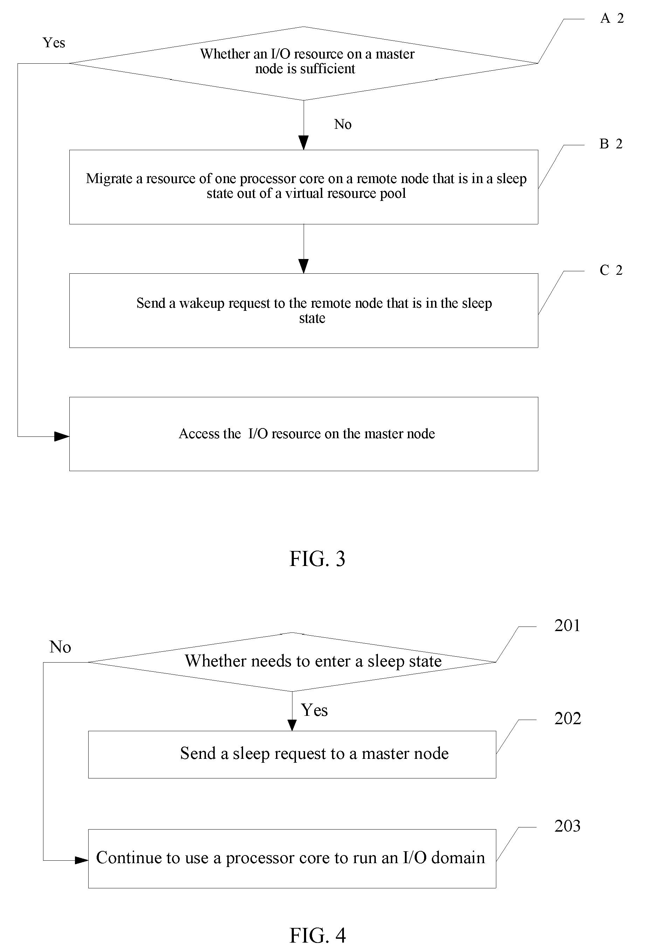

(2) Referring to FIG. 3, judge whether an I/O resource access request exists on the master node, if an I/O resource access request exists on the master node, and the I/O resource access request belongs to access request of an I/O resource of the master node, then:
A2: judge whether the I/O resource on the master node is sufficient, and if the I/O resource on the master node is insufficient, perform step B2; and if the I/O resource on the master node is sufficient, access the I/O resource on the master node;
B2: migrate a resource of a certain processor core on any remote node that is in a sleep state out of the virtual resource pool, and then perform step C2; and
C2: send a wakeup request to the remote node that is in the sleep state, so that the remote node in the sleep state uses the processor core migrated out of the virtual resource pool to run the I/O domain.

It can be understood that, resource information of each remote node is stored on the master node, and includes information of a processor core and memory information, so that when the I/O resource on the master node is insufficient, for example, a hard disk resource or a network card resource on the master node is insufficient, the master node may wake up any remote node that is in a sleep state. Specifically, the master node may migrate a resource of a certain processor core on the remote node out of the virtual resource pool, that is, modify a resource information status of one processor core in the virtual resource pool to an occupied status, and modify a sort attribute of resource information of the processor core; and then the master node sends a wakeup request to the remote node that is in the sleep state.

The wakeup request may include information of the processor core that is migrated out of the virtual resource pool by the master node, so that after receiving the wakeup request, the remote node uses the processor core migrated out of the virtual resource pool to run the I/O domain.

An embodiment of the present invention further provides a virtual resource management method, which is applicable to the DVMM system shown in FIG. 1. The method in this embodiment is a method executed by a remote node in a DVMM system. FIG. 4 is a flow chart of the method, and the method includes:

Step 201: Run an I/O domain on a remote node, and judge whether the remote node needs to enter a sleep state, and if the remote node needs to enter a sleep state, perform step 202; and if the remote node does not need to enter a sleep state, perform step 203, where the I/O domain is stopped running when the remote node is in the sleep state.

It can be understood that, in this embodiment, the remote node itself determines whether the remote node needs to enter the sleep state, and specifically, when determining whether the remote node needs to enter the sleep state, the remote node may check whether a master node accesses an I/O resource on the remote node in a preset period of time, and if no master node accesses an I/O resource on the remote node in a preset period of time, the remote node needs to enter the sleep state. Specifically, the remote node may start a timer, and when a master node accesses the I/O resource of the remote node, the remote node resets the timer; and if no master node accesses the I/O resource of the remote node all the time, the timer times out, and in this case, the remote node determines that the remote node needs to enter the sleep state.

Step 202: Send a sleep request to the master node, so that the master node sorts, according to information of a processor core occupied by running the input/output I/O domain on the remote node, a resource of the processor core that is corresponding to the information to a virtual resource pool, so as to use the processor core to perform service processing; and the remote node stops using the processor core to run the I/O domain.

It can be understood that, when the remote node determines to enter the sleep state, the remote node sends a sleep request to the master node, and the master node performs virtual resource management. A specific management method is shown in FIG. 2 and FIG. 3, which is not described herein again. In addition, the sleep request sent by the remote node may further include the information of the processor core occupied by running the I/O domain on the remote node.

Step 203: Continue to use the processor core to run the I/O domain.

It can be seen that, in this embodiment of the present invention, if a certain remote node determines that the remote node needs to enter a sleep state, the remote node stops running an I/O domain and sends a sleep request to a master node, and the master node obtains information of a processor core occupied by running the I/O domain on the remote node, and sorts, according to the obtained information of the processor core, a resource of a corresponding processor core to a virtual resource pool, and uses the processor core to perform service processing. Since the I/O domain is stopped running when the remote node is in the sleep state, the master node adds the processor core that runs the I/O domain to the virtual resource pool, that is, sorts the information of the processor core to the virtual resource pool, so that the master node can use the resource of the processor core to process another service, thereby improving a utilization rate of the processor core and reducing a waste of resources.

In a specific embodiment, whether a remote node needs to enter a sleep state may be determined by a master node, in this case, if the master node determines to enable the remote node to enter the sleep state, the master node sends sleep instruction to the remote node, and when the remote node receives the sleep instruction, the remote node stops using a processor core to run an I/O domain.

In another embodiment, the remote node may be in a sleep state, and may also be in a wake (Wake) state. Whether the remote node is woken up is determined by the master node. If needs to be woken up, one processor core on the remote node is migrated out of the virtual resource pool, and a wakeup request is sent to the remote node. The wakeup request is used to indicate that the remote node enters a wake state, that is, requests the remote node to use a processor core outside the virtual resource pool to run an I/O domain, where the processor core outside the virtual pool is migrated out of the virtual resource pool by the master node. The wakeup request may include information of the processor core migrated out of the virtual resource pool by the master node, and after receiving the wakeup request, the remote node uses the processor core to run the I/O domain.

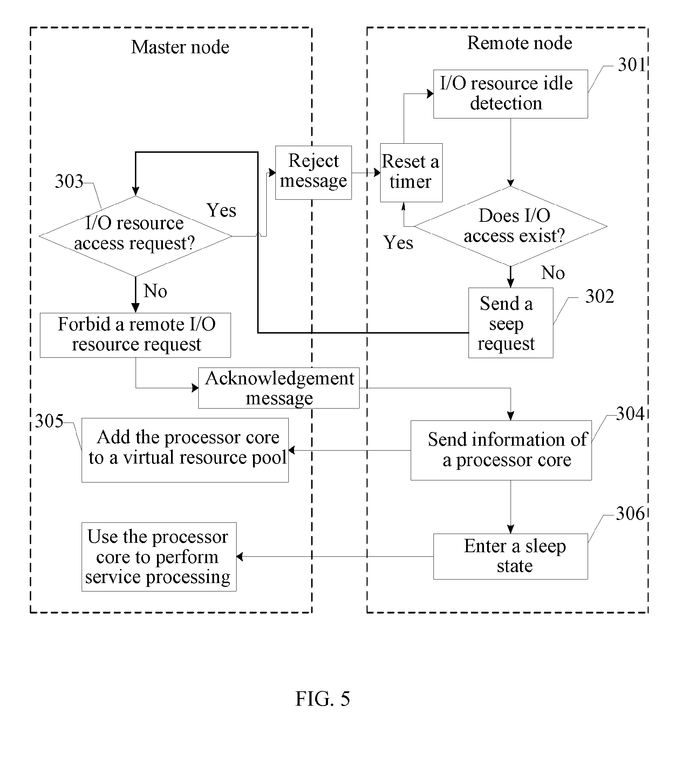

In the following, the virtual resource management method in this embodiment of the present invention is descried with reference to a specific embodiment, which is applicable to the system shown in FIG. 1. The method in this embodiment is specifically a process that a remote node enters a sleep state. FIG. 5 is a flow chart of the method, and the method includes:

Step 301: A remote node performs I/O resource idle detection. Specifically, a timer may be started on the remote node, and when a master node accesses an I/O resource of the remote node, the timer is reset; and if no master node accesses the I/O resource of the remote node in a period of time, the timer times out, and it is considered that the remote node is in an idle state of I/O resource access. At this time, the remote node may initiate a procedure of entering a sleep state.

Step 302: Send a sleep request to a master node.

Step 303: The master node may judge whether an I/O resource access request for the remote node exists on the master node, and if an I/O resource access request for the remote node exists on the master node, return a reject (Reject) message, and require the remote node to reset the timer; and if no I/O resource access request for the remote node exists on the master node, first it needs to forbid access of the I/O resource of the remote node, and then return an acknowledgement (OK) message.

Step 304: The remote node starts a sleep process, and at the same time, may send information of a processor core occupied by running an I/O domain on the remote node to the master node.

Step 305: The master node adds a corresponding processor core to a virtual resource pool, and forbids use of this processor core before receiving a notification that sleep of a remote node is completed.

Step 306: The remote node stops running the I/O domain, releases the occupied processor core, and may notify the master node that the sleep is completed. At this time, the master node can start using the processor core that is newly added to the virtual resource pool, to perform service processing.

At this time, the master node may keep an address of the I/O resource access request for the remote node, so as to wake up the remote node when the master node needs to access the I/O resource of the remote node.

It can be understood that, in this embodiment, the remote node itself determines to enter the sleep state, so as to initiate the procedure of entering the sleep state. In another specific embodiment, the master node may also access the timer of the remote node, so as to know whether the remote node needs to enter the sleep state, and therefore, the master node initiates a procedure of enabling the remote node to enter the sleep state. In this case, the master node sends a sleep instruction to the remote node, and requires the remote node to stop running the I/O domain, and the master node adds the processor core occupied by running the I/O domain on the remote node to the virtual resource pool.

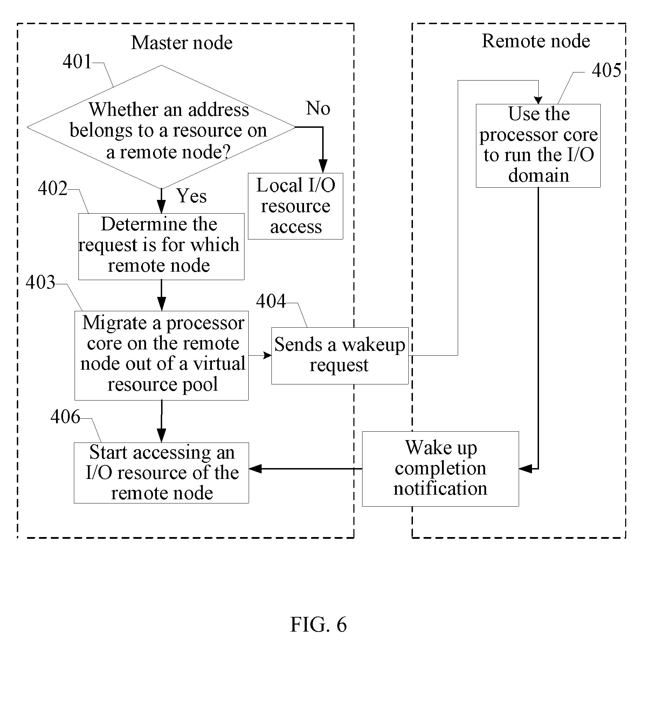

In the following, the virtual resource management method in this embodiment of the present invention is descried with reference to a specific embodiment, which is applicable to the system shown in FIG. 1. The method in this embodiment is specifically a process that a remote node that initiates a sleep state enters a wake state when an I/O resource access request for the remote node exists on a master node. FIG. 6 is a flow chart of the method, and the method includes:

Step 401: When an I/O resource access request exists on a master node, judge whether an address of the I/O resource access request belongs to a resource of a remote node, and if an address of the I/O resource access request does not belong to a resource of a remote node, perform processing in a manner for accessing an I/O resource of the master node; and if an address of the I/O resource access request belongs to a resource of a remote node, it needs to wake up the remote node.

Step 402: According to the address of the I/O resource access request and a corresponding relationship between an I/O resource access address and the remote node, where the corresponding relationship is stored in the master node, determine that a request of which remote node is the I/O resource access request.

Step 403: If the remote node is in a sleep state, at this time, a resource of a processor core of the remote node js sorted to a virtual resource pool, and the master node needs to migrate one processor core on the remote node out of the virtual resource pool.

Step 404: The master node sends a wakeup request to the remote node to request the remote node to use the processor core migrated out of the virtual resource pool to run an I/O domain, and may carry information of the processor core migrated out of the virtual resource pool in the wakeup request.

Step 405: After receiving the wakeup request, the remote node uses the processor core migrated out of the virtual resource pool in step 403 to run the I/O domain, and may notify the master node after being woken up, so as to provide an I/O resource to the master node.

Step 406: After receiving a notification from the remote node, the master node starts accessing an I/O resource of the remote node.

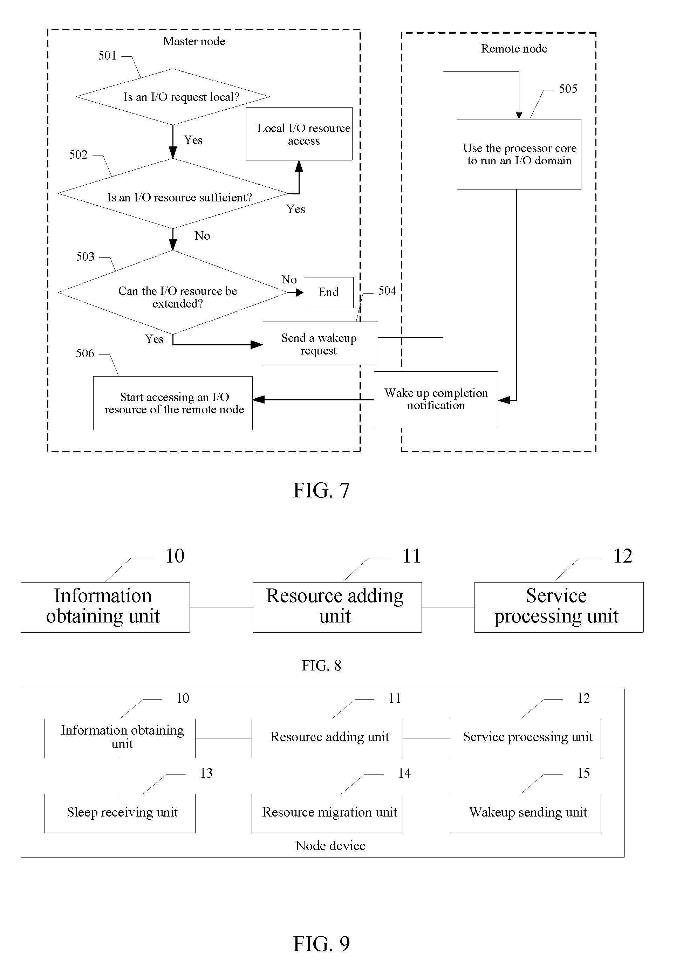

In the following, the virtual resource management method in this embodiment of the present invention is descried with reference to a specific embodiment, which is applicable to the system shown in FIG. 1. The method in this embodiment is specifically a process that a remote node that initiates a sleep state enters a wake state when an I/O resource on a master node is insufficient. FIG. 7 is a flow chart of the method, and the method includes:

Step 501: If an I/O resource access request exists on a master node, determine whether the I/O resource access request is a request for an I/O resource of the master node, and if the I/O resource access request is a request for an I/O resource of the master node, perform step 502; and if the I/O resource access request is not a request for an I/O resource of the master node, execution may be carried out according to steps 401 to 406 in the foregoing embodiment.

Step 502: The master node judges whether an I/O resource of the master node is sufficient, and if an I/O resource of the master node is sufficient, perform local I/O resource access; and if an I/O resource of the master node is insufficient, perform step 503.

Step 503: The master node judges whether the I/O resource of the master node can be extended to a remote node, and if the I/O resource of the master node cannot be extended to a remote node, the process ends; and if the I/O resource of the master node can be extended to a remote node, prepare a wake up process of the remote node.

Step 504: Migrate a processor core of any remote node out of a virtual resource pool, so that a sort attribute of the processor core is a non-virtual resource pool; and send a wakeup request to the remote node. In addition, information of the processor core migrated out of the virtual resource pool may be carried in the wakeup request.

Step 505: After receiving the wakeup request, the remote node uses the processor core migrated out of the virtual resource pool in step 504 to run an I/O domain, and may notify the master node after being woken up, so as to provide an I/O resource to the master node.

Step 506: After receiving a notification from the remote node, the master node starts accessing an I/O resource of the remote node.

It can be seen that, in the virtual resource management method in this embodiment of the present invention, switching between a sleep state and a wake state of a remote node is provided, so that when an I/O resource of the remote node is accessed infrequently, a processor core of the remote node can be most efficiently used for processing another service, thereby improving system performance; and furthermore, when an I/O resource of the master node cannot meet a requirement, for example, the remaining capacity of a hard disk is small, the I/O resource on the remote node can be dynamically used, thereby lowering stress on the I/O resource of the master node.

An embodiment of the present invention provides a node device. The node may be a terminal device, and may also be a server. FIG. 8 is a schematic structural diagram of the node device, which includes:
an information obtaining unit 10, configured to judge whether a remote node needs to enter an sleep state, and if the remote node needs to enter the sleep state, obtain information of a processor core occupied by running an input/output I/O domain on the remote node; and stop running the I/O domain when the remote node is in the sleep state; and
a resource adding unit 11, configured to sort, according to the information of the processor core, where the information is obtained by the information obtaining unit 10, a resource of the processor core that is corresponding to the information to a virtual resource pool, so that the processor core can be used to perform service processing.

It can be understood that, the node device in this embodiment of the present invention may further include a service processing unit 12, configured to use the processor core to perform service processing, where the processor core is sorted to the virtual resource pool by the resource adding unit 11.

In this embodiment of the present invention, if a certain remote node needs to enter a sleep state, the information obtianing unit 10 in the node device obtains information of a processor core occupied by runing an I/O domain on the remote node, and the resource adding unit 11 sorts, according to the obtained information of the processor core, a resource of a corresponding processor core to a virtual resource pool, and the service processing unit 12 can use the processor core to perform service processing. Since the I/O domain is stopped running when the remote node is in the sleep state, a master node adds the processor core that runs the I/O domain to the virtual resource pool, that is, sorts information of the processor core to the virtual resource pool, so that the master node can use the resource of the processor core to perform service processing, thereby improving a utilization rate of the resource of the processor core and reducing a waste of resources.

Referring to FIG. 9, in a specific embodiment, a node device in this embodiment may further include, in addition to a structure shown in FIG. 8, a sleep receiving unit 13, a resource migration unit 14, and a wakeup sending unit 15.

The sleep receiving unit 13 is configured to receive a sleep request sent by a remote node, and determine, according to the sleep request, that the remote node needs to enter a sleep state.

The resource migration unit 14 is configured to migrate a resource of one processor core on the remote node that is in the sleep state out of the virtual resource pool.

The wakeup sending unit 15 is configured to send a wakeup request to the remote node that is in the sleep state, so that the remote node in the sleep state uses a processor core outside the virtual resource pool to run an I/O domain.

In this embodiment, when the sleep receiving unit 13 receives the sleep request, it is considered that the remote node needs to enter the sleep state; an information obtaining unit 10 obtains information of a processor core that runs an I/O domain on the remote node, and the resource adding unit 11 sorts the information of the processor core to a virtual resource pool; the resource migration unit 14 may determine whether an I/O resource access request exists on a master node, and if an I/O resource access request exists on the master node, and an address of the I/O resource access request belongs to a resource of the remote node that is in the sleep state, the resource migration unit 14 migrates a resource of one processor core on the remote node that is in the sleep state out of the virtual resource pool, and the wake up unit 15 sends a wakeup request to the remote node. In this way, dynamic switching of the remote node from a sleep state to a wake up state is implemented.

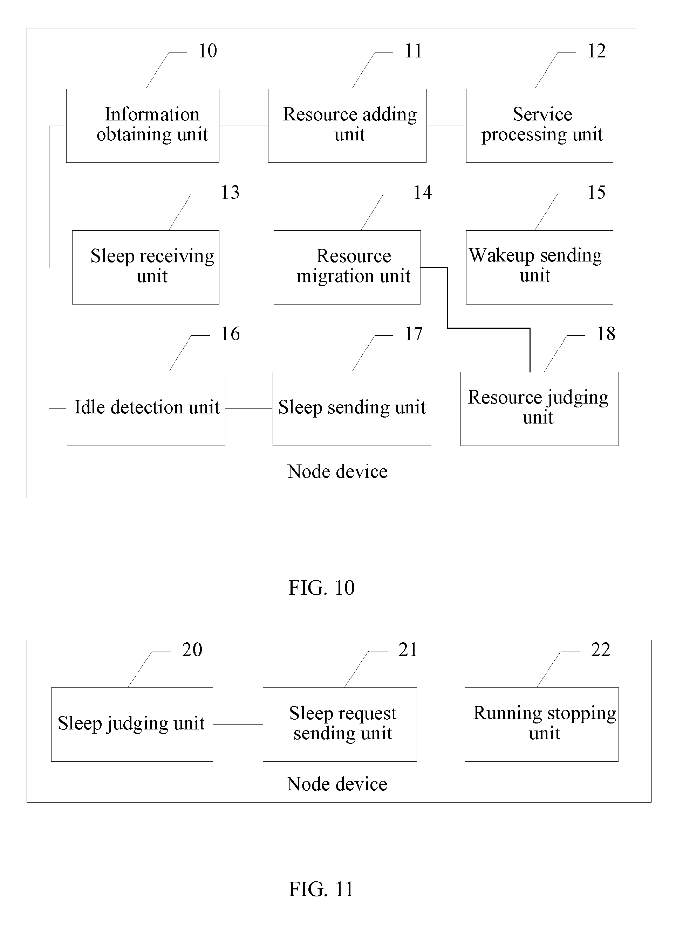

Referring to FIG. 10, in a specific embodiment, a node device in this embodiment may further include, in addition to a structure shown in FIG. 9, an idle detection unit 16, a sleep sending unit 17, and a resource judging unit 18.

The idle detection unit 16 is configured to detect whether a remote node is in an idle state of I/O resource access, where when the remote node is in the idle state of I/O resource access, an I/O resource of the remote node is not accessed in a period of time.

The sleep sending unit 17 is configured to, when the idle detection unit 16 detects that the remote node is in the idle state of I/O resource access, send a sleep instruction to the remote node, so that the remote node stops running an I/O domain.

The resource judging unit 18 is configured to judge whether an I/O resource access request exists on a master node, and if an I/O resource access request exists on the master node and the I/O resource access request belongs to access of an I/O resource on the master node, judge whether the I/O resource on the master node is sufficient.

In this embodiment, when the idle detection unit 16 of the node device detects that the remote node is in the idle state of I/O resource access, it is considered that the remote node needs to enter a sleep state, an information obtaining unit 10 obtains information of a processor core that runs an I/O domain on the remote node, and the sleep sending unit 17 sends a sleep instruction to the remote node to trigger a procedure that the remote node enters the sleep state.

In addition, in this embodiment, the resource judging unit 18 may judge whether an I/O resource access request exists on a master node device, if an I/O resource access request exists on the master node device, and the I/O resource access request belongs to access of the I/O resource of the master node, and further judge whether the resource of the master node is sufficient, where if the resource of the master node is insufficient, the resource of the master node needs to be extended, so as to initiate the process of waking up the remote node that is in the sleep state; and the resource migration unit 14 migrates a resource of one processor core on the remote node that is in the sleep state out of a virtual resource pool, and the wake up unit 15 sends a wakeup request to the remote node. In this way, dynamic switching of the remote node from a sleep state to a wake up state is implemented, and a local resource is extended.

An embodiment of the present invention provides a node device. The node may be a terminal device, and may also be a server. FIG. 11 is a schematic structural diagram of the node device, which includes:
a sleep judging unit 20, configured to run an input/output I/O domain on a remote node, and judge whether the remote node needs to enter a sleep state;
a sleep request sending unit 21, configured to send a sleep request to a master node when the sleep judging unit 20 judges that the remote node needs to enter the sleep state, so that the master node sorts, according to information of a processor core occupied by running the input/output I/O domain on the remote node, a resource of the processor core that is corresponding to the information to a virtual resource pool, so as to use the processor core to perform service processing; and
a running stopping unit 22, configured to stop using the processor core to run the I/O domain.

In this embodiment of the present invention, if a sleep judging unit 20 of a certain remote node judges that the remote node needs to enter a sleep state, a running stopping unit 22 of the remote node stops running an I/O domain, a sleep request sending unit 21 sends a sleep request to a master node, and the master node obtains information of a processor core occupied by running the I/O domain on the remote node, and sorts, according to the obtained information of the processor core, a resource of a corresponding processor core to a virtual resource pool, so that the processor core can be used to perform service processing. Since the I/O domain is stopped running when the remote node is in the sleep state, the master node adds the processor core that runs the I/O domain to the virtual resource pool, so that the master node can use the resource of the processor core to perform service processing, thereby improving a utilization rate of the processor core and reducing a waste of resources.

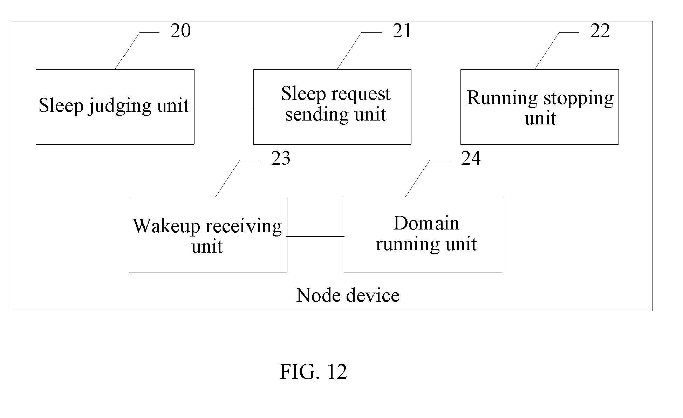

Referring to FIG. 12, in a specific embodiment, a node device may further include, in addition to a structure shown in FIG. 11, a wake up receiving unit 23 and a domain running unit 24.

The wakeup receiving unit 23 is configured to receive a wakeup request sent by a master node, where the wakeup request is used to request a remote node to use a processor core outside a virtual resource pool to run an I/O domain, and the processor core outside the virtual resource pool is migrated out of the virtual resource pool by the master node.

The domain running unit 24 is configured to use the processor core migrated out of the virtual resource pool to run the I/O domain.

In this embodiment, the wakeup receiving unit 23 may receive the wakeup request sent by the master node, so that the domain running unit 24 runs the I/O domain, thereby implementing switching of the remote node from a sleep state to a wake up state.

An embodiment of the present invention further provides a virtual resource management system, which may be the system shown in FIG. 1, and specifically includes a master node and at least one remote node.

The master node is configured to judge whether a remote node needs to enter a sleep state, and if the remote node needs to enter the sleep state, obtain information of a processor core occupied by running an input/output I/O domain on the remote node; stop running the I/O domain when the remote node is in the sleep state; and sort, according to the obtained information of the processor core, a resource of the processor core that is corresponding to the information to a virtual resource pool, so that the processor core can be used to perform service processing, where the virtual resource pool is used to store a virtualized physical resource of a node.

The remote node is configured to stop using the processor core to run the I/O domain.

A structure of the master node in this system may be a structure of the node device shown in any one of FIG. 8 to FIG. 10, and a structure of the remote node may be a structure of the node device shown in FIG. 11 or FIG. 12, and the master node and the remote node may perform virtual resource management according to the method shown in any one of FIG. 2 to FIG. 7.

Persons of ordinary skill in the art may understand that all or a part of the steps in the method in the foregoing embodiments may be implemented by a program instructing relevant hardware. The program may be stored in a computer readable storage medium. The storage medium may include a ROM, a RAM, a magnetic disk, or an optical disk.

The virtual resource management method, system and apparatus that are provided in the embodiments of the present invention are described in detail in the foregoing. The principle and implementation manner of the present invention are described in this specification by using specific examples. The foregoing descriptions about the embodiments of the present invention are merely used for helping understand the method and core ideas of the present invention. Meanwhile, persons of ordinary skill in the art may make variations to specific implementation manners and application scopes according to the ideas of the present invention. Therefore, the contents of this specification shall not be construed as a limitation to the present invention.

## Claims

1. A virtual resource management method, comprising:
running an input/output I/O domain on a remote node, judging whether the remote node needs to enter a sleep state, and if the remote node needs to enter the sleep state, obtaining information of a processor core occupied by running the input/output I/O domain on the remote node, and stopping running the input/output I/O domain when the remote node is in the sleep state; and
sorting, according to the obtained information of the processor core, a resource of the processor core that is corresponding to the information to a virtual resource pool, so that the processor core is applicable to service processing.

2. The method according to claim 1, wherein the judging whether the remote node needs to enter the sleep state comprises:
receiving a sleep request sent by the remote node, and determining, according to the sleep request, that the remote node needs to enter the sleep state.

3. The method according to claim 2, wherein the judging whether the remote node needs to enter the sleep state comprises: detecting whether the remote node is in an idle state of I/O resource access, and if the remote node is in an idle state of I/O resource access, determining that the remote node needs to enter the sleep state, wherein when the remote node is in the idle state of I/O resource access, an I/O resource of the remote node is not accessed in a period of time; and
before the sorting the resource of the processor core that is corresponding to the information to the virtual resource pool, further comprising: sending a sleep instruction to the remote node, so that the remote node stops running the input/output I/O domain.

4. The method according to any one of claims 1 to 3, further comprising:
judging whether an I/O resource access request exists on a master node, and if an I/O resource access request exists on the master node and an address of the I/O resource access request on the master node belongs to a resource of the remote node that is in the sleep state, migrating a resource of one processor core on the remote node that is in the sleep state out of the virtual resource pool; and
sending a wakeup request to the remote node that is in the sleep state, so that the remote node in the sleep state uses the processor core migrated out of the virtual resource pool to run the input/output I/O domain.

5. The method according to any one of claims 1 to 3, further comprising:
judging whether an I/O resource access request exists on a master node, and if an I/O resource access request exists on the master node and the I/O resource access request on the master node belongs to access of an I/O resource of the master node, judging whether the I/O resource on the master node is sufficient, and if the I/O resource on the master node is insufficient, migrating a resource of one processor core on the remote node that is in the sleep state out of the virtual resource pool, and
sending a wakeup request to the remote node that is in the sleep state, so that the remote node in the sleep state uses the processor core migrated out of the virtual resource pool to run the input/output I/O domain.

6. A virtual resource management method, comprising:
running, by a remote node, an input/output I/O domain, and judging whether the remote node needs to enter a sleep state, and if the remote node needs to enter a sleep state, sending a sleep request to a master node, so that the master node sorts, according to information of a processor core occupied by running the input/output I/O domain on the remote node, a resource of the processor core that is corresponding to the information to a virtual resource pool, so as to use the processor core to perform service processing; and
stopping using the processor core to run the input/output I/O domain.

7. The method according to claim 6, wherein the determining whether the remote node needs to enter the sleep state specifically comprises:
determining that the remote node needs to enter the sleep state if an I/O resource on the remote node is not accessed in a preset period of time.

8. The method according to claim 6 or 7, wherein
a wakeup request sent by the master node is received, wherein the wakeup request is used to request the remote node to use a processor core outside the virtual resource pool to run the input/output I/O domain, and the processor core outside the virtual resource pool is migrated out of the virtual resource pool by the master node; and
the migrated processor core is used to run the input/output I/O domain.

9. Anode device, comprising:
an information obtaining unit, configured to judge whether a remote node needs to enter a sleep state, and if the remote node needs to enter the sleep state, obtain information of a processor core occupied by running an input/output I/O domain on the remote node; and stop running the input/output I/O domain when the remote node is in the sleep state; and
a resource adding unit, configured to sort, according to the obtained information of the processor core, a resource of the processor core that is corresponding to the information to a virtual resource pool, so that the processor core can be used to perform service processing.

10. The node device according to claim 9, further comprising a sleep receiving unit, configured to receive a sleep request sent by the remote node, and determine, according to the sleep request, that the remote node needs to enter the sleep state.

11. The node device according to claim 9, further comprising an idle detection unit and a sleep sending unit;
wherein the idle detection unit is configured to detect whether the remote node is in an idle state of I/O resource access, and if the remote node is in an idle state of I/O resource access, determine that the remote node needs to enter the sleep state, wherein when the remote node is in the idle state of I/O resource access, an I/O resource of the remote node is not accessed in a period of time; and
the sleep sending unit is configured to, when the idle detection unit detects that the remote node is in the idle state of I/O resource access, send a sleep instruction to the remote node, so that the remote node stops running the input/output I/O domain.

12. The node device according to any one of claims 9 to 11, further comprising:
a resource migration unit, configured to judge whether an I/O resource access request exists on a master node, if an I/O resource access request exists on the master node and an address of the I/O resource access request belongs to a resource of the remote node that is in the sleep state, migrate a resource of one processor core on the remote node that is in the sleep state out of the virtual resource pool; and
a wakeup sending unit, configured to send a wakeup request to the remote node that is in the sleep state, so that the remote node in the sleep state uses the processor core migrated out of the virtual resource pool to run the input/output I/O domain.

13. The node device according to any one of claims 9 to 11, further comprising:
a resource judging unit, configured to judge whether an I/O resource access request exists on a master node, and if an I/O resource access request exists on the master node and the I/O resource access request belongs to access of an I/O resource of the master node, judge whether the I/O resource on the master node is sufficient;
wherein the resource migration unit is further configured to, when the resource judging unit judges that the I/O resource on the master node is insufficient, migrate a resource of one processor core on the remote node that is in the sleep state out of the virtual resource pool.

14. Anode device, comprising:
a sleep judging unit, configured to run an input/output I/O domain on a remote node, and judge whether the remote node needs to enter a sleep state;
a sleep request sending unit, configured to send a sleep request to a master node when the sleep judging unit judges that the remote node needs to enter the sleep state, so that the master node sorts, according to information of a processor core occupied by running the input/output I/O domain on the remote node, a resource of the processor core that is corresponding to the information to a virtual resource pool, so as to use the processor core to perform service processing; and
a running stopping unit, configured to stop using the processor core to run the input/output I/O domain.

15. The node device according to claim 14, further comprising:
a wakeup receiving unit, configured to receive a wakeup request sent by the master node, wherein the wakeup request is used to request the remote node to use a processor core outside the virtual resource pool to run the input/output I/O domain, and the processor core outside the virtual resource pool is migrated out of the virtual resource pool by the master node; and
a domain running unit, configured to use the processor core migrated out of the virtual resource pool to run the input/output I/O domain.

16. A virtual resource management system, comprising a master node and at least one remote node;
wherein the master node is configured to judge whether a remote node needs to enter a sleep state, and if the remote node needs to enter the sleep state, obtain information of a processor core occupied by running an input/output I/O domain on the remote node; stop running the input/output I/O domain when the remote node is in the sleep state; and sort, according to the obtained information of the processor core, a resource of the processor core that is corresponding to the information to a virtual resource pool, so that the processor core can be used to perform service processing; and
the remote node is configured to stop using the processor core to run the input/output I/O domain.

17. The system according to claim 16, wherein the master node is the node device according to any one of claims 9 to 13.

18. The system according to claim 16, wherein the remote node is the node device according to claim 14 or 15.
